# EUROPÄISCHE PATENTSCHRIFT

(11) **EP 3 529 120 B1**
(45) Veröffentlichungstag und Bekanntmachung des Hinweises auf die Patenterteilung: **27.01.2021**
(21) Anmeldenummer: 17808362.2
(22) Anmeldetag: 14.11.2017
(51) Int. Cl.: B61D 23/02, B60R 3/02

(54) **TRITTMECHANISMUS FÜR EIN FAHRZEUG UND FAHRZEUG MIT TRITTMECHANISMUS**
STEP MECHANISM FOR A VEHICLE AND VEHICLE HAVING A STEP MECHANISM
MÉCANISME DE MARCHE POUR VÉHICULE ET VÉHICULE DOTÉ D'UN MÉCANISME DE MARCHE

(30) Priorität: 14.12.2016 DE 102016224917
(43) Veröffentlichungstag der Anmeldung: 28.08.2019
(73) Patentinhaber: Siemens Mobility GmbH, 81739 München (DE)
(72) Erfinder: KRÜGER, Axel, 47799 Krefeld (DE)
(86) Internationale Anmeldenummer: PCT/EP2017/079113
(87) Internationale Veröffentlichungsnummer: WO 2018/108409

(56) Entgegenhaltungen:
- DE-U1- 20 104 220
- FR-A1- 2 142 787
- FR-A1- 2 338 834
- GB-A- 2 535 442

## Beschreibung

Die Erfindung betrifft einen Trittmechanismus zum Aus- und Einschwenken eines Tritts für ein Fahrzeug, mit einem Tritt, einer Anbringeinrichtung zum schwenkbaren Anbringen des Tritts am Fahrzeug und einem bewegungsübertragend mit dem Tritt verbundenen Schwenkhebel zum Aus- und Einschwenken des Tritts, wobei der Tritt um eine Schwenkachse schwenkbar an der Anbringeinrichtung befestigt ist, wobei der Trittmechanismus einen Bedienhebel aufweist, der über einen ersten Anschlagpunkt schwenkbar am Schwenkhebel angeschlagen ist, wobei der Bedienhebel einen vom ersten Anschlagpunkt beabstandeten zweiten Anschlagpunkt zur schwenkbaren Befestigung des Bedienhebels an einem zur Schwenkachse stationären Element aufweist. Ferner betrifft die Erfindung ein Fahrzeug mit einer Zutrittsöffnung und einem Trittmechanismus.

Trittmechanismen und Fahrzeuge mit Trittmechanismen sind allgemein bekannt. So kann der Tritt ausgefahren werden, um ein Einsteigen in das Fahrzeug zu erleichtern, insbesondere wenn die Zutrittsöffnung zu hoch angeordnet ist, um diese einfach zu erreichen. Beispielsweise kann das Fahrzeug ein Triebfahrzeug oder ein Waggon eines Zuges sein, dessen Zutrittsöffnung weit oberhalb des Gleisbettes und beispielsweise 80 cm oberhalb der Schiene, auf dem das Fahrzeug steht, angeordnet ist. Um die Zutrittsöffnung einfach zu erreichen, kann der Tritt in eine ausgefahrene Position aufgefahren werden. Um zu vermeiden, dass der Tritt während der Fahrt des Fahrzeuges von diesem absteht und womöglich beschädigt werden kann, kann der Tritt in eine eingefahrene Position eingefahren werden. Um den Tritt von der ausgefahrenen Position in die eingefahrene Position zu bewegen, ist bekannt, einen elektrischen Antrieb vorzusehen. Elektrische Antriebe sind jedoch teuer in der Herstellung und aufwendig in der Integration ins Fahrzeug. Die Druckschrift FR 2 338 834 A weist beispielhaft einen gattungsgemäßen Trittmechanismus auf. Ein Trittmechanismus gemäß dem Oberbegriff des unabhängigen Patentanspruchs 1 wird durch die Druckschriften DE 20 2015 101 009 U1, US 1 802 926 A sowie DE 10 2016 005 891 A1 offenbart.

Die der Erfindung zugrunde liegende Aufgabe besteht also darin, einen Trittmechanismus und ein Fahrzeug mit einem Trittmechanismus bereitzustellen, wobei der Trittmechanismus preiswert herzustellen und einfach in das Fahrzeug zu integrieren ist.

Erfindungsgemäß wird diese Aufgabe für den eingangs genannten Trittmechanismus dadurch gelöst, dass der Bedienhebel zwischen den Anschlagpunkten mit einem Knickgelenk ausgebildet ist und, dass der Bedienhebel in der eingeschwenkten Position des Tritts in einer Blockierknickstellung geknickt angeordnet ist, in der der Bedienhebel ein unbeabsichtigtes Ausschwenken des Tritts blockiert. Insbesondere lässt sich der Schwenkhebel in der Blockierknickstellung des Bedienhebels nicht aus der eingeschwenkten Position in die ausgefahrene Position schwenken, da der Bedienhebel eine solche Schwenkbewegung in der Blockierknickstellung blockiert. Eine manuelle Sicherung des Tritts in der eingeschwenkten Position ist nicht erforderlich. Für das eingangs genannte Fahrzeug wird die Aufgabe dadurch gelöst, dass der Trittmechanismus des Fahrzeuges der erfindungsgemäße Trittmechanismus ist.

Die erfindungsgemäße Ausgestaltung des Trittmechanismus mit dem das Knickgelenk aufweisenden Bedienhebel ermöglicht einen einfachen mechanischen Aufbau und ein simple Montage sowie eine ohne weiteres ersichtliche manuelle Bedienung des Trittmechanismus und insbesondere ein mechanisches Sperren des Trittmechanismus in der eingefahrenen Position, da der Bedienhebel aufgrund des Knickgelenkes übertotpunktverriegelbar ist. Ein ungewolltes Schwenken des Schwenkhebels und somit des Tritts aus der eingeschwenkten Position heraus ist somit sicher verhinderbar.

Die erfindungsgemäße Lösung kann durch verschiedene, jeweils für sich vorteilhafte und, sofern nicht anders ausgeführt, beliebig miteinander kombinierbare Ausgestaltungen weiter verbessert werden. Auf diese Ausgestaltungsformen und die mit ihnen verbundenen Vorteile ist im Folgenden eingegangen:
Der Bedienhebel kann in der Blockierknickstellung auf die Schwenkachse zu geknickt sein. Insbesondere kann das Knickelement in der Blockierknickstellung des Bedienhebels in einer horizontalen Richtung zwischen der Schwenkachse und dem Tritt angeordnet sein, wenn der Trittmechanismus im Fahrzeug verbaut ist.

Um nun den Tritt ausschwenken zu können, kann das Knickgelenk von der Schwenkachse weg in Richtung auf den Tritt bewegt werden, sodass der Bedienhebel im Zuge dieser Bewegung aus der Blockierknickstellung in eine Freigabeknickstellung, in der der Tritt ausschwenkbar oder ausgeschwenkt ist, von der Schwenkachse weg geknickt sein. Die Bewegung weg von der Schwenkachse hin zum Tritt zum Ausschwenken des Tritts ermöglicht eine einfache und intuitive Bedienung des Trittmechanismus.

Der Bedienhebel kann ausgebildet sein, den Tritt auszuschwenken, wenn das Knickelement von der Schwenkachse weg und beispielsweise entlang einer Kreisbahn auf den Tritt zu bewegt wird. Gerade wenn eine Person, die sich außerhalb des Fahrzeuges befindet, versucht, den Tritt auszuschwenken, würden sich das Knickelement und somit auch der Schwenkhebel auf die Person zu bewegen, sodass die Person den Tritt ohne Weiteres ausschwenken kann, wenn ein Bedienelement des Trittmechanismus in der eingeschwenkten Position einmal ergriffen wurde. Beim Ausschwenken des Tritts bewegt sich also das Knickgelenk von der Schwenkachse weg und beispielsweise in Richtung auf die Zutrittsöffnung und ist somit einfacher bedienbar.

Der Bedienhebel kann zwei Schenkel aufweisen, die sich vom Knickelement weg erstrecken. Der Winkel zwischen den der Schwenkachse zugewandten Seiten der Schenkel beträgt in der Blockierknickstellung mehr als 180° und in der FreigabeKnickstellung weniger als 180°.

Der Bedienhebel kann eine Anschlagfläche aufweisen, wobei die Anschlagfläche in der Blockierknickstellung der Schwenkachse zugewandt ist. Die Anschlagfläche kann ausgebildet sein, in der Blockierknickstellung Kräfte, die das Knickgelenk in Richtung auf die Schwenkachse zu bewegen suchen, in ein Anschlagelement zu leiten. Das Anschlagelement ist mit Bezug auf die Schwenkachse ortsfest und kann durch den Trittmechanismus oder durch das Fahrzeug selbst bereitgestellt sein.

Der Trittmechanismus kann ein Verbindungselement aufweisen, wobei das Verbindungselement den Schwenkhebel und den Tritt bewegungsübertragend miteinander verbindet. Das Verbindungselement kann einen Dichtabschnitt zur dichtenden Verbindung mit einem Dichtelement einer Tür des Fahrzeuges, mit der die Zutrittsöffnung schließbar ist, aufweisen. In der eingeschwenkten Position des Tritts kann das Dichtelement der Tür mit dem Dichtabschnitt also eine Dichtverbindung eingehen, sodass keine Flüssigkeit, beispielsweise Regen, an dem Ort, an dem das Verbindungselement durch eine Außenseite des Fahrzeuges zum Tritt verläuft, in das Fahrzeug eindringen kann.

Beispielsweise weist der Dichtabschnitt wenigstens eine Dichtfläche auf, die Teil einer Dichtstufe sein kann. Im geschlossenen Zustand der Tür kann das Dichtelement der Tür an dieser Dichtfläche dichtend anliegen. Sowohl das Dichtelement als auch zumindest der Bereich der Dichtfläche des Dichtabschnittes können aus einem elastischen Werkstoff, beispielsweise Gummi, gefertigt sein.

Der Trittmechanismus kann eine Blockiereinrichtung zum Blockieren der geöffneten Tür des Fahrzeuges aufweisen, wobei die Blockiereinrichtung bewegungsübertragend mit dem Bedienhebel verbunden ist. Insbesondere in der ausgeschwenkten Position des Trittmechanismus kann die Blockiereinrichtung in ihrer Blockierposition angeordnet sein, und ein vollständiges Schließen der Tür verhindern. In modernen Fahrzeugen und insbesondere in modernen Zügen schließen die Türen automatisch. Ob die Tür vollständig geschlossen ist, wird mithilfe eines Sensors überprüft. Lässt sich die Tür nicht vollständig schließen, so ist dies ein Hinweis darauf, dass der Tritt ausgeschwenkt ist und das Fahrzeug seine Fahrt aus Sicherheitsgründen nicht beginnen sollte. Ein separater Sensor, der überprüft, ob sich der Trittmechanismus in der eingeschwenkten Position befindet, ist nicht notwendig, wodurch sich der Installationsaufwand des Trittmechanismus weiter verringert.

Insbesondere in der eingefahrenen Position ist die Blockiereinrichtung in ihrer Freigabeposition, in der die Tür ohne Weiteres schließen kann. Die Freigabeposition kann sich näher an der Schwenkachse befinden als die Blockierposition.

Das Fahrzeug kann die Zutrittsöffnung aufweisen, die im Rohbau des Fahrzeuges der, falls das Fahrzeug ein Zug ist, ein Wagenkastenrohbau sein kann, vorgesehen ist. Die Zutrittsöffnung ist also durch den Rohbau vorgegeben. Die Zutrittsöffnung des Fahrzeuges kann einen Durchtrittsbereich aufweisen, der für Personen durchschreitbar ist. Der Durchtrittsbereich kann schmaler sein als die Zutrittsöffnung. Der Schwenkhebel ist beispielsweise wenigstens abschnittsweise außerhalb des Durchtrittsbereiches in der Zutrittsöffnung angeordnet. Optional können auch der Bedienhebel und/oder die Blockiereinrichtung außerhalb des Durchtrittsbereiches in der Zutrittsöffnung angeordnet sein.

Außerhalb des Durchtrittsbereiches kann die Zutrittsöffnung einen Mechanikbereich aufweisen, in dem beispielsweise zumindest teilweise eine Mechanik zum Bewegen der Tür vorgesehen sein kann. Im Mechanikbereich kann der Trittmechanismus wenigstens abschnittsweise und insbesondere der Schwenkhebel, der Bedienhebel und/oder die Blockiereinrichtung angeordnet sein. Der Trittmechanismus blockiert also nicht den Durchtrittsbereich für Personen und schränkt dessen Größe auch nicht ein.

Das Fahrzeug kann die die Zutrittsöffnung im geschlossen Zustand verschließende Tür aufweisen, wobei die Tür ihrer Unterseite ein Dichtelement zum Abdichten der Zutrittsöffnung im geschlossenen Zustand der Tür aufweisen kann. Ferner kann das Fahrzeug ein Gegendichtelement für das Dichtelement aufweisen, wobei das Gegendichtelement eine Aufnahmeöffnung für den Dichtabschnitt des Verbindungselementes aufweist. In der eingefahrenen Position des Trittmechanismus kann die wenigstens eine Dichtfläche des Dichtabschnittes mit einer Gegendichtfläche des Gegendichtelementes fluchten, um zusammen mit dem Dichtelement ein Abdichten der Zutrittsöffnung bei geschlossener Tür zu ermöglichen.

Der Bedienhebel kann vom Durchtrittsbereich aus bedienbar sein und insbesondere ein vom Durchtrittsbereich aus erreichbares Bedienelement, etwa einen Griff, aufweisen.

Zumindest wenn der Tritt nicht vollständig eingeschwenkt ist und insbesondere wenn der Tritt vollkommen ausgeschwenkt ist, kann die Blockiereinrichtung in die Zutrittsöffnung hinein ragen, um ein Schließen der Tür zu blockieren.

Das Knickelement kann als ein Knickgelenk ausgebildet sein. Insbesondere kann das Knickelement eine Knickachse vorgeben, um die der Bedienhebel knickbar ist, also dessen Schenkel schwenkbar sein können.

Die Schwenkachse kann parallel zu Knick- und/oder Drehachsen des Trittmechanismus verlaufen. Insbesondere können alle Schwenk-, Knick- und Drehachsen parallel zur Fahrtrichtung des Fahrzeuges verlaufen. Die Schwenk- und Knickbewegungen können parallel zueinander und senkrecht zur Schwenkachse verlaufen. Die Aus- und Einschwenkrichtungen können um die Schwenkachse herum verlaufen. Dies vereinfacht den mechanischen Aufbau und die Bedienung des Trittmechanismus weiter.

Das Fahrzeug kann ein Teil eines Zuges oder ein anderes Fahrzeug mit einer hohen Zutrittsöffnung, zum Beispiel ein Lastkraftwagen oder ein Baufahrzeug, sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 eine schematische Seitenansicht eines Fahrzeuges mit einer Zutrittsöffnung und einem Ausführungsbeispiel des erfindungsgemäßen Trittmechanismus,
Figur 2 und 3 schematische Schnittansichten des Ausführungsbeispiels des Trittmechanismus der Figur 1 in einer eingeschwenkten Position des Tritts, und
Figur 4 und 5 schematische Schnittansichten des Ausführungsbeispiels des Trittmechanismus der Figuren 1 bis 3 in einer ausgeschwenkten Position des Tritts.

Im Folgenden ist die Erfindung beispielhalft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

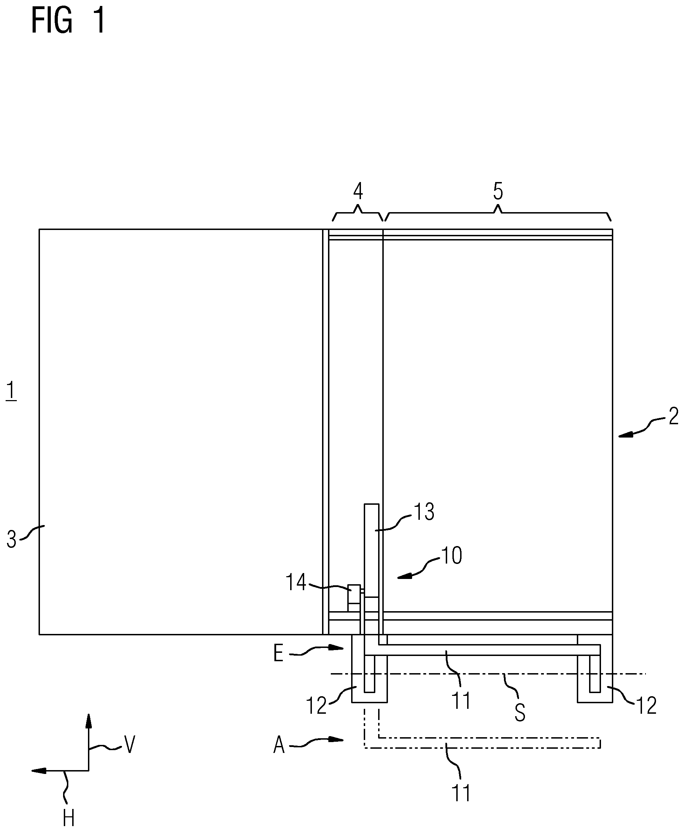

Fig. 1 zeigt schematisch eine Seitenansicht eines Fahrzeuges 1. Das dargestellte Fahrzeug 1 ist beispielsweise ein Teil eines Zuges, etwa ein Waggon oder ein Triebfahrzeug. Das Fahrzeug 1 ist mit einer Zutrittsöffnung 2 versehen, die durch den Rohbau des Fahrzeuges 1 vorgegeben sein kann. Durch die Zutrittsöffnung 2 ist das Fahrzeug 1 betret- oder verlassbar. Um die Zutrittsöffnung 2 insbesondere während der Fahrt des Fahrzeuges 1 verschließen zu können, weist das Fahrzeug 1 eine Tür 3 auf, die beispielhaft als eine Schwenkschiebetür dargestellt ist. Um die Tür 3 automatisch öffnen und schließen zu können, kann das Fahrzeug 1 eine Türmechanik aufweisen. Die in der Fig. 1 nicht dargestellte Türmechanik kann in einem Abschnitt der Zutrittsöffnung 2 angeordnet sein, der als ein Mechanikbereich 4 dargestellt ist. Der Mechanikbereich 4 kann für Personen, die das Fahrzeug 1 betreten oder verlassen wollen, unzugänglich und insbesondere in einem in der Zutrittsöffnung 2 angeordneten Gehäuse vorgesehen sein.

Der Mechanikbereich 4 ist in der Fig. 1 beispielsweise auf der Seite der Zutrittsöffnung 2 vorgesehen, neben der die Tür 3 im geöffneten Zustand angeordnet ist. Ein verbleibender freier Bereich der Zutrittsöffnung 2 ist in der Fig. 1 als ein Durchtrittsbereich 5 markiert. Durch den Durchtrittsbereich 5 können Personen durch die Zutrittsöffnung 2 schreiten.

Das Fahrzeug 1 der Fig. 1 weist einen Trittmechanismus 10 auf. Der Trittmechanismus 10 ist mit einem Tritt 11 versehen, wobei der Tritt 11 in einer eingeschwenkten Position E dargestellt ist. Der Tritt 11 ist über eine Anbringeinrichtung 12 an einer Unterseite des Fahrzeuges 1 angebracht. Der Tritt 11 ist an der Anbringeinrichtung 12 um eine Schwenkachse S herum schwenkbar an einer Unterseite des Fahrzeuges 1 angebracht. Die Schwenkachse S verläuft vorzugsweise in der horizontalen Richtung H. Um die Schwenkachse S herum ist der Tritt 11 aus seiner eingeschwenkten Position E heraus in seine ausgeschwenkte Position A schwenkbar. Die ausgeschwenkte Position A des Tritts 11 ist in der vertikalen Richtung V vorzugsweise weiter unten angeordnet, als die eingeschwenkte Position E des Tritts 11. Weiter unten bedeutet, dass der Tritt 11 in der ausgeschwenkten Position A weiter entfernt von der Zutrittsöffnung 2 angeordnet ist als in der eingeschwenkten Position E.

Um den Tritt 11 einfach aus- und einschwenken zu können, weist der Trittmechanismus 10 einen Schwenkhebel 13 auf. Der Schwenkhebel 13 ist bewegungsübertragend mit dem Tritt 11 verbunden, um den Tritt 11 manuell oder automatisiert ein- und ausschwenken zu können. Ein Bedienhebel des Trittmechanismus 10 ist in der Fig. 1 nicht dargestellt. Allerdings zeigt die Fig. 1 eine optionale Blockiereinrichtung 14, die in der ausgeschwenkten Position A des Tritts 11 durch die Zutrittsöffnung 2 ragt und somit ein Schließen der Tür 3 verhindert oder blockiert. In der eingeschwenkten Position E des Tritts 11 blockiert die Blockiereinrichtung 14 das Schließen der Tür 3 jedoch nicht; die Blockiereinrichtung 14 ist dann vollständig außerhalb des Bewegungsbereichs der Tür 3 und zum Beispiel vollständig innerhalb des Fahrzeuges 1 angeordnet.

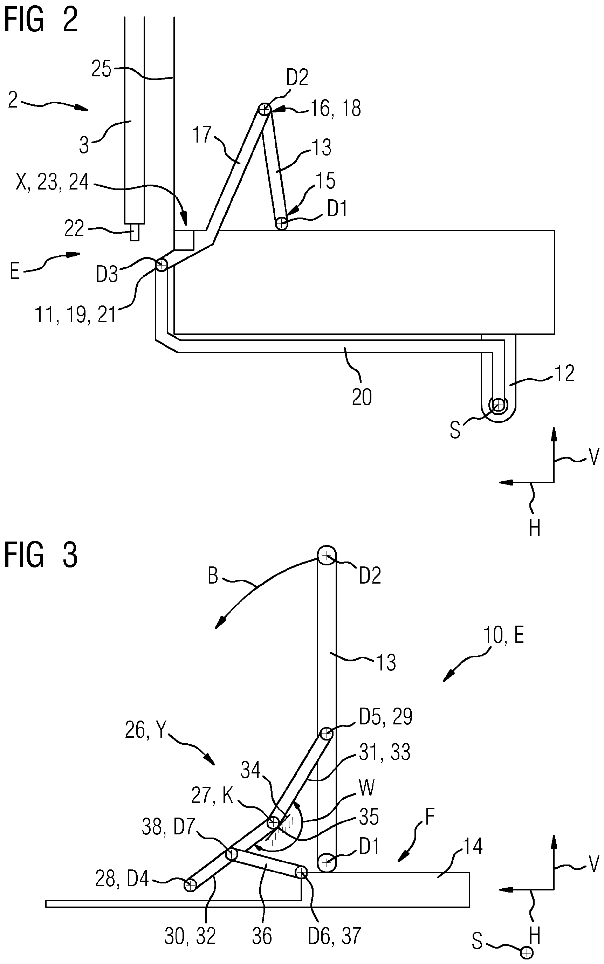

Fig. 2 zeigt das Ausführungsbeispiel der Fig. 1 in einer schematischen Schnittansicht, wobei die Schnittebene quer zur Schwenkachse S verläuft. In der Fig. 2 ist weder der Bedienhebel noch die Blockiereinrichtung 14 erkennbar.

Der Schwenkhebel 13 weist zwei Enden 15, 16 auf. Das erste Ende 15 des Schwenkhebels 13 ist zur Schwenkachse S unverschiebbar angebracht. Allerdings ist der Schwenkhebel 13 um eine Drehachse D1 herum dreh- beziehungsweise schwenk- oder kippbar, wobei die Drehachse D1 im Ausführungsbeispiel der Fig. 2 durch das erste Ende 15 verläuft. Das dem ersten Ende 15 gegenüberliegende zweite Ende 16 des Schwenkhebels 13 ist um die Drehachse D1 herum schwenkbar. Die Drehachse D1 und die Schwenkachse S können parallel zueinander und insbesondere zur horizontalen Richtung H verlaufen.

Um den Schwenkhebel 13 bewegungsübertragend mit dem Tritt 11 zu verbinden, kann der Trittmechanismus 10 ein Verbindungselement 17 aufweisen. Das Verbindungselement 17 kann um eine weitere Drehachse D2 dreh- oder kippbar mit dem Schwenkhebel 13 und insbesondere mit dessen zweitem Ende 16 verbunden sein. Insbesondere ein Ende 18 des Verbindungselementes 17 kann mit dem zweiten Ende 16 des Schwenkhebels 13 drehbar verbunden sein. Die Drehachse D2 kann parallel zur Schwenkachse S verlaufen.

Auch die Befestigung des Verbindungselements 17 am Tritt 11 kann so ausgebildet sein, dass das Verbindungselement 17 um eine Drehachse D3 herum schwenk-, kipp- oder drehbar am Tritt 11 angebracht ist. Dabei kann die Drehachse D3 durch den Tritt 11 verlaufen. Insbesondere kann ein dem Ende 18 gegenüberliegendes Ende 19 des Verbindungselementes 17 um die Drehachse D3 herum drehbar am Tritt 11 angeschlagen sein.

Zur Verbindung der Anbringeinrichtung 12 mit dem Tritt 11 kann der Trittmechanismus 10 ein Halteelement 20 aufweisen. Das Halteelement 20 kann starr und um die Schwenkachse S schwenkbar ausgebildet sein. Der Tritt 11 kann an einem von der Schwenkachse S maximal entfernten Ende 21 des Halteelementes 20 befestigt sein.

Eine untere Seite der Tür 3 kann mit einem Dichtelement 22 versehen sein, sodass die Zutrittsöffnung 2 im geschlossenen Zustand der Tür 3 gegen eindringende Feuchtigkeit abgedichtet ist. In der Schnittdarstellung der Fig. 2 ist das Dichtelement 22 lediglich an einer unteren Seite der Tür 3 sichtbar. Das Fahrzeug 1 kann für das Dichtelement 22 ein Gegendichtelement 23 bereitstellen, das an die Zutrittsöffnung 2 angrenzen kann. Im geschlossen Zustand der Tür 3 liegt das Dichtelement 22 am Gegendichtelement 23 an. Beispielsweise kann das Gegendichtelement 23 an einer Außenwand 25 des Fahrzeuges 1 montiert sein.

Wenn der Tritt 11 auch in der eingeschwenkten Position E außerhalb des Fahrzeuges 1 angeordnet ist, kann sich das Verbindungselement 17 von einem Inneren des Fahrzeuges 1 bis zum Tritt 11 erstrecken. Damit das Verbindungselement 17 in der eingeschwenkten Position E nicht auf dem Gegendichtelement 23 aufliegt und somit ein Abdichten der Zutrittsöffnung bei geschlossener Tür 3 verhindert, kann das Gegendichtelement 23 eine Aufnahmeöffnung X für zumindest einen Abschnitt des Verbindungselementes 17 aufweisen. Die Aufnahmeöffnung X kann im Wesentlichen komplementär zu dem Abschnitt des Verbindungselementes 17 ausgeformt sein.

Um zu verhindern, dass am Verbindungselement 17 Feuchtigkeit in das Fahrzeug 1 eintritt, kann der Abschnitt des Verbindungselements 17 als ein Dichtabschnitt 24 ausgebildet sein. Der Dichtabschnitt 24 kann wie das Gegendichtelement 23 eine Dichtfläche aufweisen. Insbesondere können der Dichtabschnitt 24 und das Gegendichtelement 23 jeweils eine Dichtfläche aufweisen, wobei die Dichtflächen in der eingeschwenkten Position E miteinander fluchten und eine nahezu durchgehende Dichtfläche für das Dichtelement 22 ausformen.

In einer senkrecht zur Schwenkachse S verlaufenen horizontalen Richtung H, die von der Schwenkachse S in Richtung auf das Innere des Fahrzeuges 1 weisen kann, folgt auf die Schwenkachse S zunächst die Drehachse D1. Hinter der Drehachse D1 kann in der horizontalen Richtung H und von der Schwenkachse S aus betrachtet die Drehachse D3 angeordnet sein. Die Drehachse D2 kann in der horizontalen Richtung H in der eingeschwenkten Position E zwischen den Drehachsen D1, D3 oder vor der Drehachse D1 angeordnet sein.

Fig. 3 zeigt das Ausführungsbeispiel der Fig. 1 und Fig. 2 in einer schematischen Seitenansicht entlang der Schwenkachse S, die der Ansicht der Fig. 2 entspricht. In der Fig. 3 ist jedoch lediglich der Schwenkhebel 13 sowie die optionale Blockiereinrichtung 14 und ferner der Bedienhebel 26 des Trittmechanismus 10 gezeigt.

Der Trittmechanismus 10 ist wieder in seiner eingeschwenkten Position E dargestellt. Der Trittmechanismus 10 weist den Bedienhebel 26 auf, wobei der Bedienhebel 26 mit einem Knickelement 27 ausgestaltet ist. Der Bedienhebel 26 ist also aufgrund des Knickelementes 27 knickbar. Das Knickelement 27 ist zwischen zwei Anschlagpunkten 28, 29 des Bedienhebels 26 angeordnet. Beispielsweise ist das Knickelement 27 mittig zwischen den Anschlagpunkten 28, 29 des Bedienhebels 26 vorgesehen. Die Anschlagpunkten 28, 29 können jeweils an unterschiedlichen Enden des Bedienhebels 26 angeordnet sein.

Das Knickelement 27 gibt Knickachse K vor, um die der Bedienhebel 26 herum knickbar ist. Beispielsweise ist das Knickelement 27 als ein Knickgelenk ausgestaltet.

Der Bedienhebel 26 ist um eine weitere Drehachse D4 kipp- oder schwenkbar. Die Drehachse D4 ist mit Bezug auf die Schwenkachse S unverschiebbar und kann parallel zur Schwenkachse S verlaufen. Beispielsweise verläuft die Drehachse D4 durch den Anschlagpunkt 28 des Bedienhebels 26. Beabstandet vom Anschlagpunkt 28 und beispielsweise mit seinem dem Anschlagpunkt 28 gegenüberliegenden Anschlagpunkt 29 kann der Bedienhebel 26 bewegungsübertragend mit dem Schwenkhebel 13 verbunden sein. Der Bedienhebel 26 kann dreh- bzw. schwenkbar um eine Drehachse D5 am Schwenkhebel 13 angebracht sein. Beispielsweise verläuft die Drehachse D5 durch eines der Enden des Bedienhebels 26.

Der Bedienhebel 26 weist zwei vom Knickelement 27 weg und jeweils zu einem der Enden des Bedienhebels 26 hin verlaufende Schenkel 30, 31 auf. Die Schenkel 30, 31 selbst können starr ausgeformt sein und insbesondere Bedienkräfte weiterleiten. Je einer der Anschlagpunkte 28, 29 kann an jeweils einem der Schenkel 30, 31 vorgesehen sein.

In der eingeschwenkten Position E ist der Bedienhebel 26 in seiner Blockierknickstellung Y auf die Schwenkachse S zu gekickt, sodass ein Winkel W zwischen den der Schwenkachse S zugewandten Seiten 32, 33 der Schenkel 30, 31 größer als 180° ist. Wirken nun Kräfte, die den Schwenkhebel 13 aus der eingeschwenkten Position E in einer Bewegungsrichtung B in Richtung auf die ausgeschwenkte Position A zu bewegen suchen, so würde eine solche Bewegung dazu führen, dass sich das Knickgelenk 27 weiter auf die Schwenkachse S zu bewegt und sich der Winkel W vergrößert.

Der Trittmechanismus 10 beziehungsweise das Fahrzeug 1 kann jedoch ein Anschlagelement 34 aufweisen, das zumindest im montierten Zustand des Trittmechanismus 10 unverschiebbar mit Bezug auf die Schwenkachse S ist.

Der Bedienhebel 26 und beispielsweise dessen Knickelement 27 kann eine Anschlagfläche 35 aufweisen, die zumindest in der eingeschwenkten Position E zur Schwenkachse S weist. Wird nun versucht, den Schwenkhebel 13 aus der eingeschwenkten Position E in Richtung auf die ausgeschwenkte Position A zu bewegen, wird diese Anschlagfläche 35 gegen das stationäre Anschlagelement 34 gedrückt. Das Anschlagelement 34 blockiert jedoch die Bewegung des Schwenkhebels 13, sodass ein Entfernen des Tritts 11 aus der eingeschwenkten Position E nicht möglich ist.

Um die optionale Blockiereinrichtung 14 aus ihrer dargestellten Freigabeposition F in ihre Blockierposition, in der die Blockiereinrichtung 14 ein Schließen der Tür 3 blockiert oder verhindert, zu bewegen, kann der Trittmechanismus 10 ein Mitnehmerelement 36 aufweisen, das die Blockiereinrichtung 14 bewegungsübertragend mit dem Bedienhebel 26 verbindet. Beispielsweise kann das Mitnehmerelement 36 einander gegenüberliegende Enden 37, 38 aufweisen, wobei eines der Enden 37 an der Blockiereinrichtung 14 und das andere Ende 38 am Bedienhebel 26 befestigt ist. Das Mitnehmerelement 36 kann starr ausgeformt und um eine weitere Drehachse D6 drehbar mit der Blockiereinrichtung 14 verbunden sein. Am Bedienhebel 26 kann das Mitnehmerelement 36 um noch eine weitere Drehachse D7 drehbar am Bedienhebel 26 verbunden sein. Die Drehachsen D6, D7 können parallel zur Schwenkachse S und beispielsweise jeweils durch eines der Enden 37, 38 verlaufen.

In der eingeschwenkten Position E kann die Knickachse K von der Schwenkachse S aus gesehen und in der horizontalen Richtung H hinter der Drehachse D1 des Schwenkhebels 13 angeordnet sein. In der vertikalen Richtung V kann die Knickachse K von der Schwenkachse S aus gesehen hinter der Drehachse D1 angeordnet sein. Ferner kann auch die Drehachse D4 in der eingeschwenkten Position E von der Schwenkachse S aus gesehen in der horizontalen Richtung H hinter der Drehachse D1 und beispielswiese auch hinter der Knickachse K angeordnet sein. Die Knickachse K kann in der horizontalen Richtung H in der eingeschwenkten Position E zwischen den Drehachsen D4, D5 vorgesehen sein.

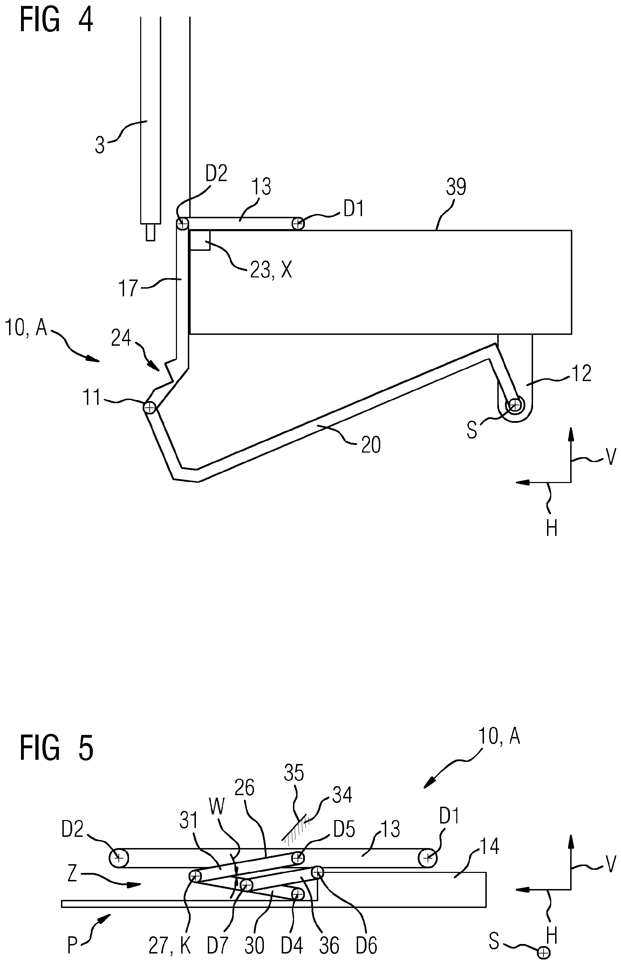

Fig. 4 zeigt das Ausführungsbeispiel der bisherigen Figuren in der Ansicht der Fig. 2, wobei der Trittmechanismus 10 in der ausgeschwenkten Position A dargestellt ist.

In der ausgeschwenkten Position A kann der Schwenkhebel 13 parallel zur horizontalen Richtung H verlaufen und beispielsweise auf einem Boden 39 des Fahrzeuges 1 aufliegen. Hierdurch werden Kräfte bei der Benutzung des Tritts 11 einfach in den Boden abgeleitet. Das Verbindungselement 17 kann in der ausgeschwenkten Position A zumindest abschnittsweise parallel zur vertikalen Richtung V verlaufen, um wiederum Hebelkräfte bei der Benutzung des Tritts 11 zu minimieren. In der Fig. 4 sind das Gegendichtelement 23 und dessen Aufnahmeöffnung X sichtbar und nicht wie in der Fig. 2 durch den Dichtabschnitt 24 verdeckt. Das Gegendichtelement 23 kann mit der Aufnahmeöffnung X ausgeformt sein oder zur Bereitstellung der Aufnahmeöffnung X unterbrochen sein.

Insbesondere in der ausgeschwenkten Position A kann die Drehachse D2 in der horizontalen Richtung H hinter der Drehachse D1 angeordnet sein.

Fig. 5 zeigt das Ausführungsbeispiel der bisherigen Figuren in der Seitenansicht der Fig. 3, wobei der Trittmechanismus 10 in der ausgeschwenkten Position A dargestellt ist.

Der Winkel W zwischen den Schenkeln 30, 31 des Bedienhebels 26 ist in der dargestellten Freigabeknickstellung Z des Bedienhebels 26 kleiner als 180°. Um den Bedienhebel 26 aus seiner Blockierknickstellung, in der der Winkel W größer als 180° ist, in die dargestellte Freigabeknickstellung Z zu überführen, kann es ausreichen, das Knickelement 27 weg von der Schwenkachse S beziehungsweise weg von dem Anschlagelement 34 zu bewegen. Folglich kann ein Bedienelement, das zum manuellen oder automatisierten Bedienen des Trittmechanismus 10 vorgesehen ist, beispielsweise am Bedienhebel 26 und insbesondere an dessen Knickelement 27 befestigt sein. Um den Tritt 11 jedoch wieder in die eingeschwenkte Position E zu bewegen, kann es aufgrund der größeren Länge des Schwenkhebels 13 bezogen auf zumindest einen der Schenkel 30, 31 einfacher sein, Kräfte zum Einschwenken des Tritts 11 in das freie Ende 16 des Schwenkhebels 13 einzuleiten. Folglich kann der Schwenkhebel 13 alternativ oder zusätzlich ein Bedienelement aufweisen, das zum Beispiel am freien Ende 16 des Schwenkhebels 13 angeordnet sein kann.

In der ausgeschwenkten Position A hat das Mitnehmerelement 36 die optionale Blockiereinrichtung 14 von ihrer Freigabeposition F in die Blockierposition P überführt, sodass die Blockiereinrichtung 14 zumindest teilweise durch die Zutrittsöffnung 2 ragt und somit ein Schließen der Tür 3 verhindert. In der horizontalen Richtung H kann die Knickachse K in der ausgeschwenkten Position A hinter den Drehachsen D4, D5 vorgesehen sein. Die Drehachse D6 kann in der horizontalen Richtung H vor den Drehachsen D4, D5 angeordnet sein.

## Patentansprüche

1. Trittmechanismus (10) zum Aus- und Einschwenken eines Tritts (11) für ein Fahrzeug (1), mit einem Tritt (11), einer Anbringeinrichtung (12) zum schwenkbaren Anbringen des Tritts (11) am Fahrzeug (1), und einem bewegungsübertragenden mit dem Tritt (11) verbundenen Schwenkhebel (13) zum Aus- und Einschwenken des Tritts (11), wobei der Tritt (11) um eine Schwenkachse (S) schwenkbar an der Anbringeinrichtung (12) befestigt ist, wobei der Trittmechanismus (10) einen Bedienhebel (26) aufweist, der über einen ersten Anschlagpunkt (29) schwenkbar am Schwenkhebel (13) angeschlagen ist, wobei der Bedienhebel (26) einen vom ersten Anschlagpunkt (29) beabstandeten zweiten Anschlagpunkt (28) zur schwenkbaren Befestigung des Bedienhebels (26) an einem zur Schwenkachse (S) stationären Element aufweist, **dadurch gekennzeichnet, dass** der Bedienhebel (26) zwischen den Anschlagpunkten (28, 29) mit einem Knickelement (27) ausgebildet ist und, dass der Bedienhebel (26) in einer eingeschwenkten Position (E) des Tritts (11) in einer Blockierknickstellung (Y) geknickt angeordnet ist, in der der Bedienhebel (26) ein unbeabsichtigtes Ausschwenken des Tritts (11) blockiert.

2. Trittmechanismus (10) nach Anspruch 1, **dadurch gekennzeichnet, dass** der Bedienhebel (26) in der Blockierknickstellung (Y) auf die Schwenkachse (S) zu geknickt ist.

3. Trittmechanismus (10) nach einem der Ansprüche 1 oder 2, **dadurch gekennzeichnet, dass** der Bedienhebel (26) in einer Freigabeknickstellung (Z), in der der Tritt (11) ausschwenkbar oder ausgeschwenkt ist, von der Schwenkachse (S) weg geknickt ist.

4. Trittmechanismus (10) nach einem der Ansprüche 1 bis 3, **dadurch gekennzeichnet, dass** der Bedienhebel (26) ausgebildet ist, den Tritt (11) auszuschwenken, wenn das Knickgelenk (27) von der Schwenkachse (S) weg bewegt wird.

5. Trittmechanismus (10) nach einem der Ansprüche 1 bis 4, **dadurch gekennzeichnet, dass** der Bedienhebel (26) eine Anschlagfläche (35) aufweist, wobei die Anschlagfläche (35) in der Blockierknickstellung (Y) der Schwenkachse (S) zugewandt ist.

6. Trittmechanismus (10) nach einem der Ansprüche 1 bis 5, **dadurch gekennzeichnet, dass** der Trittmechanismus (10) ein Verbindungselement (17) aufweist, wobei das Verbindungselement (17) den Schwenkhebel (13) und den Tritt (11) bewegungsübertragend miteinander verbindet und wobei das Verbindungselement (17) einen Dichtabschnitt (24) zur dichten Verbindung mit einem Dichtelement (22) einer Tür (3) des Fahrzeuges (1) aufweist.

7. Trittmechanismus (10) nach Anspruch 6, **dadurch gekennzeichnet, dass** der Dichtabschnitt (24) wenigstens eine Dichtfläche aufweist.

8. Trittmechanismus (10) nach einem der Ansprüche 1 bis 7, **dadurch gekennzeichnet, dass** der Trittmechanismus (10) eine Blockiereinrichtung (14) zum Blockieren einer geöffneten Tür (3) des Fahrzeuges (1) aufweist, wobei die Blockiereinrichtung (14) bewegungsübertragend mit dem Bedienhebel (26) verbunden ist.

9. Fahrzeug (1) mit einer Zutrittsöffnung (2) und einem Trittmechanismus (10), **dadurch gekennzeichnet, dass** der Trittmechanismus (10) der Trittmechanismus (10) eines der Ansprüche 1 bis 8 ist.

10. Fahrzeug (1) nach Anspruch 9, **dadurch gekennzeichnet, dass** die Zutrittsöffnung (2) des Fahrzeuges (1) einen Durchtrittsbereich (5) aufweist, der schmaler ist als die Zutrittsöffnung (2), wobei der Schwenkhebel (13) wenigstens abschnittsweise außerhalb des Durchtrittsbereiches (5) in der Zutrittsöffnung (2) angeordnet ist.

11. Fahrzeug (1) nach Anspruch 9 oder 10, **dadurch gekennzeichnet, dass** das Fahrzeug (1) eine die Zutrittsöffnung (2) im geschlossenen Zustand verschließende Tür (3) aufweist, wobei die Tür (3) an einer Unterseite ein Dichtelement (22) zum Abdichten der Zutrittsöffnung (2) im geschlossenen Zustand der Tür (3), und das Fahrzeug (1) ein Gegendichtelement (23) für das Dichtelement (22) aufweisen, wobei das Gegendichtelement (23) mit einer Aufnahmeöffnung (X) für den Dichtabschnitt (24) ausgestaltet ist.

12. Fahrzeug (1) nach einem der Ansprüche 10 oder 11, **dadurch gekennzeichnet, dass** der Bedienhebel (26) vom Durchtrittsbereich (5) aus bedienbar ist.

## Claims

1. Step mechanism (10) by means of which a step (11) for a vehicle (1) is pivoted out and in, having a step (11), having a fitting device (12) for fitting the step (11) in a pivotable manner on the vehicle (1), and having a movement-transmitting pivot lever (13), which is connected to the step (11) and by means of which the step (11) is pivoted out and in, wherein the step (11) is fastened on the fitting device (12) such that it can be pivoted about a pivot axis (S), wherein the step mechanism (10) has an operating lever (26), which is attached to the pivot lever (13) in a pivotable manner via a first point of attachment (29), wherein the operating lever (26) has a second point of attachment (28), which is spaced apart from the first point of attachment (29) and is intended for fastening the operating lever (26) in a pivotable manner on an element which is stationary in relation to the pivot axis (S), **characterized in that**, between the points of attachment (28, 29), the operating lever (26) is formed by way of a folding element (27), and **in that**, in a pivoted-in position (E) of the step (11), the operating lever (26) is arranged in a folded state in a blocking-action folding position (Y), in which the operating lever (26) blocks an unintended pivoting-out action of the step (11).

2. Step mechanism (10) according to Claim 1, **characterized in that**, in the blocking-action folding position (Y), the operating lever (26) has been folded towards the pivot axis (S) .

3. Step mechanism (10) according to either of Claims 1 and 2, **characterized in that** in a release-action folding position (Z), in which the step (11) can be pivoted out or has been pivoted out, the operating lever (26) has been folded away from the pivot axis (S).

4. Step mechanism (10) according to one of Claims 1 to 3, **characterized in that** the operating lever (26) is designed to pivot the step (11) out when the folding joint (27) is moved away from the pivot axis (S).

5. Step mechanism (10) according to one of Claims 1 to 4, **characterized in that** the operating lever (26) has a stop surface (35), wherein, in the blocking-action folding position (Y) the stop surface (35) is directed towards the pivot axis (S) .

6. Step mechanism (10) according to one of Claims 1 to 5, **characterized in that** the step mechanism (10) has a connecting element (17), wherein the connecting element (17) connects the pivot lever (13) and the step (11) to one another for movement-transmission purposes, and wherein the connecting element (17) has a sealing portion (24) for sealed connection to a sealing element (22) of a door (3) of the vehicle (1).

7. Step mechanism (10) according to Claim 6, **characterized in that** the sealing portion (24) has at least one sealing surface.

8. Step mechanism (10) according to one of Claims 1 to 7, **characterized in that** the step mechanism (10) has a blocking device (14) for blocking an open door (3) of the vehicle (1), wherein the blocking device (14) is connected to the operating lever (26) for movement-transmission purposes.

9. Vehicle (1) having an access opening (2) and a step mechanism (10), **characterized in that** the step mechanism (10) is the step mechanism (10) from one of Claims 1 to 8.

10. Vehicle (1) according to Claim 9, **characterized in that** the access opening (2) of the vehicle (1) has a through-passage region (5) which is narrower than the access opening (2), wherein the pivot lever (13) is arranged in the access opening (2) at least to some extent outside the through-passage region (5) .

11. Vehicle (1) according to Claim 9 or 10, **characterized in that** the vehicle (1) has a door (3) which, in a closed state, closes the access opening (2), wherein the door (3) has an underside sealing element (22) for sealing the access opening (2) in the closed state of the door (3), and the vehicle (1) has a mating sealing element (23) for the sealing element (22), wherein the mating sealing element (23) is configured with an accommodating opening (X) for the sealing portion (24).

12. Vehicle (1) according to either of Claims 10 and 11, **characterized in that** the operating lever (26) can be operated from the through-passage region (5).

## Revendications

1. Mécanisme (10) de marche pour sortir et rentrer une marche (11) d'un véhicule (1) par pivotement, comprenant une marche (11), un dispositif (12) de montage pour monter à pivotement la marche (11) sur le véhicule (1) et, relié la marche (11) à transmission de déplacement, un levier (13) pivotant pour rentrer et sortir la marche (11) par pivotement, la marche (11) étant fixée au dispositif (12) de montage, de manière à pouvoir pivoter autour d'un axe (S) de pivotement, le mécanisme (10) de marche ayant un levier (26) de manœuvre, qui, par un premier point (29) de butée, bute à pivotement sur le levier (13) pivotant, le levier (26) de manœuvre ayant un deuxième point (28) de butée à distance du premier point (29) de butée pour la fixation à pivotement du levier (26) de manœuvre sur un élément fixe par rapport à l'axe (S) de pivotement, **caractérisé en ce que** le levier (26) de manœuvre est constitué en ayant un élément (27) de coude entre les points (28, 29) de butée et **en ce que** le levier (26) de manœuvre est, dans une position (E) rentrée par pivotement de la marche (11), coudé dans une position (Y) coudée de blocage, dans laquelle le levier (26) de manœuvre bloque une sortie intempestive par pivotement de la marche (11).

2. Mécanisme (10) de marche suivant la revendication 1, **caractérisé en ce que** le levier (26) de manœuvre est, dans la position (Y) coudée de blocage, coudé vers l'axe (S) de pivotement.

3. Mécanisme (10) de marche suivant l'une des revendications 1 ou 2, **caractérisé en ce que** le levier (26) de manœuvre est, dans une position (Z) coudée de libération, dans laquelle la marche (11) peut sortir par pivotement ou est sortie par pivotement, coudé en s'éloignant de l'axe (S) de pivotement.

4. Mécanisme (10) de marche suivant l'une des revendications 1 à 3, **caractérisé en ce que** le levier (26) de manœuvre est constitué pour faire sortir la marche (11) par pivotement, si on éloigne l'articulation (27) coudée de l'axe (S) de pivotement.

5. Mécanisme (10) de marche suivant l'une des revendications 1 à 4, **caractérisé en ce que** le levier (26) de manœuvre a une surface (35) de butée, la surface (35) de butée étant, dans la position (Y) coudée de blocage, tournée vers l'axe (S) de pivotement.

6. Mécanisme (10) de marche suivant l'une des revendications 1 à 5, **caractérisé en ce que** le mécanisme (10) de marche a un élément (17) de liaison, l'élément (17) de liaison reliant entre eux, avec transmission du déplacement, le levier (13) pivotant et la marche (11), et l'élément (17) de liaison ayant une partie (24) d'étanchéité pour la liaison étanche avec un élément (22) d'étanchéité d'une portière (3) du véhicule (1).

7. Mécanisme (10) de marche suivant la revendication 6, **caractérisé en ce que** la partie (24) d'étanchéité a au moins une surface d'étanchéité.

8. Mécanisme (10) de marche suivant l'une des revendications 1 à 7, **caractérisé en ce que** le mécanisme (10) de marche a un dispositif (14) de blocage pour le blocage d'une portière (3) ouverte du véhicule (1), le dispositif (14) de blocage étant relié à transmission du déplacement au levier (26) de manœuvre.

9. Véhicule (1) ayant une ouverture (2) d'accès et un mécanisme (10) de marche, **caractérisé en ce que** le mécanisme (10) de marche est le mécanisme (10) de marche de l'une des revendications 1 à 8.

10. Véhicule (1) suivant la revendication 9, **caractérisé en ce que** l'ouverture (2) d'accès du véhicule (1) a une région (5) de passage, qui est plus étroite que l'ouverture d'accès, le levier (13) pivotant étant disposé, au moins par endroits, à l'extérieur de la région (5) de passage dans l'ouverture (2) d'accès.

11. Véhicule (1) suivant la revendication 9 ou 10, **caractérisé en ce que** le véhicule (1) a une portière (3) fermant à l'état fermé l'ouverture (2) d'accès, la portière (3) ayant, d'un côté inférieur, un élément (22) d'étanchéité pour rendre étanche l'ouverture (2) d'accès dans l'état fermé de la portière (3), et le véhicule (1) a un élément (23) d'étanchéité antagoniste de l'élément (22) d'étanchéité, l'élément (23) d'étanchéité antagoniste étant conformé en ayant une ouverture (X) de réception de la partie (24) d'étanchéité.

12. Véhicule (1) suivant l'une des revendications 10 ou 11, **caractérisé en ce que** le levier (26) de manœuvre peut être manœuvré à partir de la région (5) de passage.
